# EUROPÄISCHE PATENTSCHRIFT

(11) **EP 1 267 086 B1**
(45) Veröffentlichungstag und Bekanntmachung des Hinweises auf die Patenterteilung: **21.01.2004**
(21) Anmeldenummer: 02011400.5
(22) Anmeldetag: 24.05.2002
(51) Int. Cl.: F16B 13/08, F16B 37/12, F16B 19/10, F16B 13/12

(54) **Befestigungsanker mit Hülse und Aufweitkörper**
Fastening anchor with sleeve and expandable element
Boulon d'ancrage avec manchon et élément d'expansion

(30) Priorität: 16.06.2001 DE 20109979 U
(43) Veröffentlichungstag der Anmeldung: 18.12.2002
(73) Patentinhaber: EJOT VERBINDUNGSTECHNIK GmbH & Co. KG, 57334 Bad Laasphe (DE)
(72) Erfinder: Kross, Manfred, 58644 Iserlohn (DE)
(74) Vertreter: Eisenführ, Speiser & Partner

(56) Entgegenhaltungen:
- EP-A- 0 748 943
- GB-A- 2 153 472
- US-A- 5 366 328

## Beschreibung

Die Erfindung betrifft einen Befestigungsanker zum Anbringen eines Bauelements, insbesondere eines Fensterrahmens, an einer Wand o. dgl., mit einer länglichen Hülse, deren einer Endabschnitt zur Befestigung in der Wand dient, während nahe ihrem anderen Endabschnitt in ihrem Innern ein Aufweitkörper angeordnet ist, durch dessen axiale Längsverschiebung die Hülse zur Befestigung des Bauelements im wesentlichen radial aufweitbar ist.

Ein derartiger Befestigungsanker ist aus der EP 0 748 943 B1 bekannt. Er dient vornehmlich zur Befestigung von Fenstern oder ähnlichen Bauelementen an einer Wand in einstellbarem Abstand von dieser. Die das tragende Element des Befestigungsankers bildende Hülse wird in eine in die Wand eingebrachte Bohrung eingeschlagen und auf diese Weise in der Wand fixiert; sie kann jedoch auch durch Aufweiten - wie ein Dübel - im Loch arretiert werden. Auf den frei vorstehenden Abschnitt der Hülse wird das Bauelement mit einer entsprechenden Bohrung aufgeschoben, in der richtigen Stellung fixiert und durch Aufweiten eines Hülsenabschnitts innerhalb des Bauelements befestigt.

Dieses Aufweiten wird bei dem bekannten Befestigungsanker mit Hilfe einer Stange bewerkstelligt, die konzentrisch zur Hülse in deren Innern angeordnet ist und auf einen zwischen der Hülse und der Stange angeordneten Aufweitkörper wirkt. Eine Längsverschiebung der Stange, die mit Hilfe eines Werkzeugs bewirkt wird, welches an einem aus der Hülse herausragenden Abschnitt der Stange angreift, weitet auf Grund einer Durchmesserdifferenz der Stange den Aufweitkörper und mit diesem die Hülse innerhalb des Befestigungselementes auf, was zu der Fixierung und Befestigung des Bauelements führt.

Diese Ausbildung eines derartigen Befestigungsankers ist zwar zuverlässig, aber relativ aufwendig. Die Erfindung bezweckt daher eine kostengünstigere Ausgestaltung, die bei einfacher Handhabung keine Einbuße an Zuverlässigkeit der Befestigung mit sich bringt.

Erfindungsgemäß wird dies dadurch erreicht; dass der Aufweitkörper in der Hülse unverdrehbar geführt und konzentrisch zu ihr durchgehende Innengewindegänge aufweist, in die das entsprechende Außengewinde einer Schraube eingreift, welche endseitig in die Hülse eingesteckt ist und sich mit ihrem Kopf an der Stirnseite der Hülse abstützt, und dass in die Hülse im Aufweitbereich Längssicken eingeprägt sind, die mit dem Aufweitkörper bei dessen von der Schraubendrehung bewirkten Längsverschiebung zusammenwirken.

Auf diese Weise ist die für das Aufweiten der Hülse erforderliche Durchmesserdifferenz in die Hülse selbst verlegt, es bedarf keines zusätzlichen Bauteils und das Einbringen der Längssicken in die Hülse erfordert einen nur geringen Aufwand. Bei der die Längsverschiebung des Aufweitkörpers bewirkenden Schraube handelt es sich um ein Standardbauteil, und auch dessen Handhabung bei der Montage ist einfacher als das Herausziehen der Stange beim bekannten Befestigungsanker; überdies steht ein Schraubendreher eher als ein Zugwerk-zeug zur Verfügung.

Der Aufweitkörper ist praktisch eine Schraubenmutter, an deren Außenkonfiguration keine besonderen Anforderungen gestellt sind, außer dass die Unverdrehbarkeit in der Hülse gesichert sein muss. Die Erfüllung dieser Aufgabe kann aber - bei entsprechender Außengestaltung des Aufweitkörpers - zusätzlich den Längssicken in der Hülse zugewiesen werden.

Es ist zwar aus der GB 2 094 695 A bekannt, zur Befestigung von Isoliermaterial an einem plattenförmigen Element eine das (freitragende) Ende einer Dübelhülse aufweitende Schraube einzusetzen, jedoch findet dort kein in der Hülse geführter Aufweitkörper Verwendung, der die Hülse in einem der Verbindungspartner aufweitet. Auch die aus der GB 2 193 550 A bekannten Quersicken in einer Befestigungsaufgaben dienenden Hülse sind weder konstruktiv noch funktional mit den Längssicken in der Hülse des erfindungsgemäßen Befestigungsankers vergleichbar.

Nach einer bevorzugten Weiterbildung der Erfindung besteht der Aufweitkörper aus einem spiralfederartigen Wickel aus Runddraht, dessen Steigung derjenigen des Schraubengewindes entspricht. Ein derartiger Drahtwickel (praktisch eine Schraubenfeder) stellt gewissermaßen automatisch die Innengewindegänge zur Verfügung, die der Aufweitkörper braucht, und eine solche Ausgestaltung hat den besonderen Vorteil, dass der Wickel nur einen relativ kleinen Anteil des Hülsen-Innendurchmessers benötigt, so dass der Schraubendurchmesser entsprechend groß sein kann. Anders gesagt lässt sich auf diese Weise ein relativ schlanker Befestigungsanker herstellen, dessen den Aufweitkörper betätigende Schraube gleichwohl die dafür benötigten Kräfte übertragen kann.

Die Hülse kann über mindestens einen Teil ihrer Länge längsgeschlitzt sein. Dann wird zweckmäßig ein Ansatz am Aufweitkörper im Schlitz geführt werden, um die Unverdrehbarkeit zu bewirken. Entsprechend kann beim Einsatz des spiralfederartigen Wickels dessen eines Ende in den Schlitz hinein abgekröpft sein.

Um kein Verhaken des Aufweitkörpers an den Längssicken in Kauf nehmen zu müssen, wird man letztere zum Aufweitkörper hin auslaufen lassen, so dass die Tiefe der Längssicken in der Hülse zum Aufweitkörper hin abnimmt.

Die Zeichnung veranschaulicht die Erfindung an einem Ausführungsbeispiel. Darin zeigt:
- Fig. 1: einen längsgeschnittenen Befestigungsanker nach der Erfindung im zusammengebauten Zustand;
- Fig. 2: einen Schnitt gemäß der Linie II-II in Fig. 1 (nur Hülse);
- Fig. 3: eine Seitenansicht der Hülse eines etwas anderen Befestigungsankers;
- Fig. 4: einen Schnitt gemäß der Linie IV-IV in Fig. 3;
- Fig. 5: eine unterbrochene und teilweise geschnittene Seitenansicht eines aus einem Drahtwickel bestehenden Aufweitkörpers;
- Fig. 6: eine Seitenansicht desselben von links in Fig. 5;
- Fig. 7: eine Seitenansicht der dazugehörigen Schraube; und
- Fig. 8: einen zur Befestigung eines Fensterrahmens an einer Mauerwerkswand dienenden Befestigungsanker im Einbauzustand (im Schnitt).

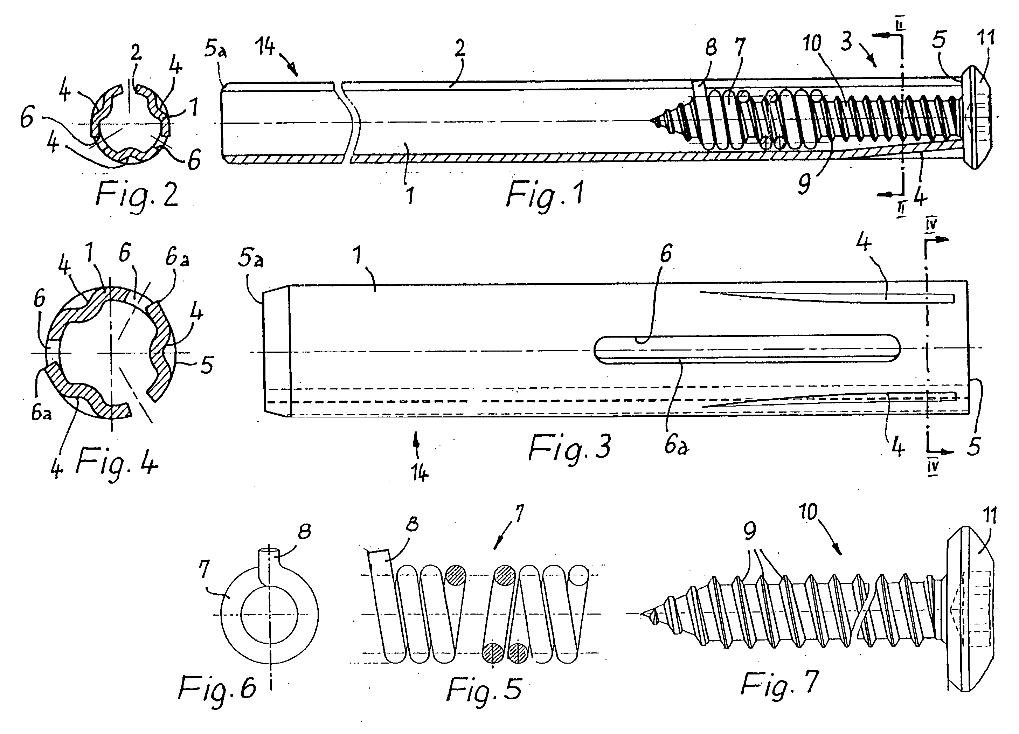

Die aus Stahl bestehende Hülse 1 ist über ihre gesamte Länge geschlitzt (Schlitz 2). Sie ist im Querschnitt kreisrund, hat jedoch an ihrem der Befestigung eines Bauelementes dienenden Endabschnitt 3 Längssicken 4, von denen drei - wie Fig. 2 zeigt - gleichmäßig über den Umfang verteilt sind. Sie erstrecken sich vom Stirnende 5 der Hülse 1 über einen Teil des Hülsen-Endabschnitts 3. Das gegenüberliegende Stirnende 5a ist angefast, um das Einführen der Hülse in das Mauerwerk o. dgl. zu erleichtern.

Fig. 3 lässt zusätzlich Schlitze 6 erkennen, die zwischen den Längssicken 4 in die Hülse eingebracht sind und das Aufweiten der Hülse in ihrem Endabschnitt 3 während der Montage begünstigen. Die jeweils eine Seitenkante 6a des Schlitzes ist - wie Fig. 4 erkennen lässt - etwas ausgestellt und bildet eine Verdrehsicherung für das im montierten Zustand dort befindliche Bauelement (Fenster o. dgl.). Ferner gehen dort die Längssicken 4 nicht bis zum Stirnende 5 durch, welches daher eine (im wesentlichen) kreisrunde Form aufweist.

In der Hülse 1 befindet sich ein Aufweitkörper in Form eines Runddraht-Wickels 7, der praktisch eine Schraubenfeder sein kann. Der Außendurchmesser des Wickels 7 entspricht abzüglich eines gewissen Spiels dem Innendurchmesser der Hülse 1. Das eine Ende 8 des Wickels 7 ist abgekröpft (Fig. 6) und ist im Längsschlitz 2 der Hülse 1 geführt, so dass der Wickel 7 in dieser unverdrehbar ist.

Die Innenkonfiguration des Wickels 7 bildet praktisch Innengewindegänge, ein durchgehendes Innengewinde. Dieses ist durch entsprechende Dimensionierung des Wickeldraht-Durchmessers und der Steigung des Wickels 7 auf das Außengewinde 9 der Schraube 10 abgestimmt, die mithin in den Wickel 7 geschraubt werden kann, wie dies Fig. 1 veranschaulicht.

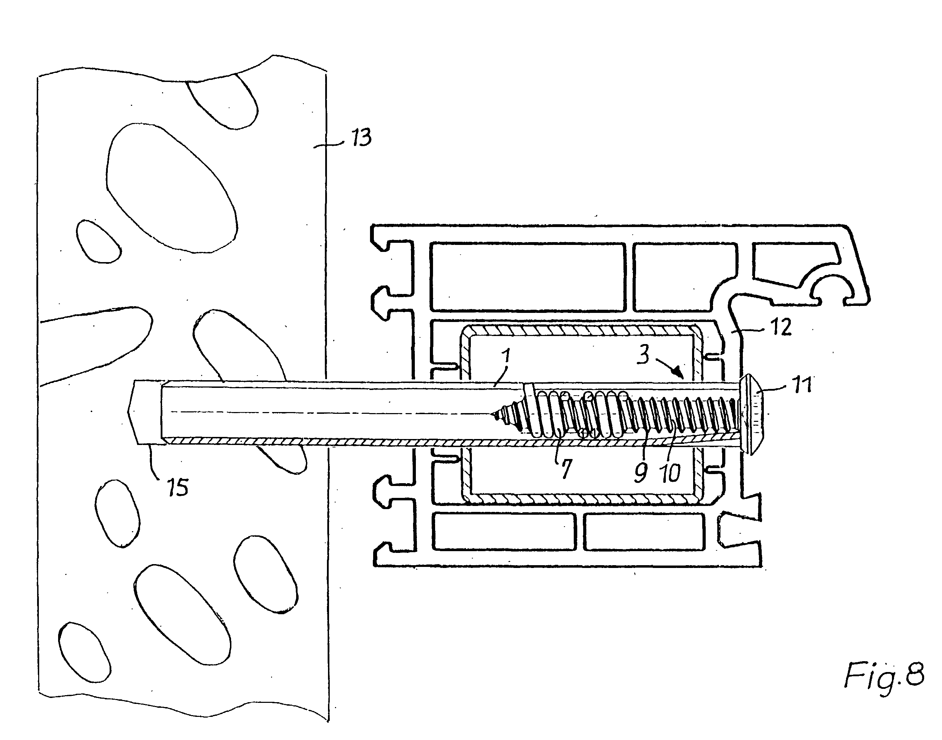

Fig. 1 zeigt den erfindungsgemäßen Befestigungsanker in vormontierter Stellung des den Aufweitkörper bildenden Wickels 7 und der Schraube 10, die mit ihrem Kopf 11 an der Stirnfläche 5 der Hülse 1 anliegt. In dieser Stellung befindet sich der Wickel 7 in axialer Richtung und gegen die Schraube 10 gesehen noch vor den Längssicken 4. Wird die Schraube im Zuge der Montage gedreht, zieht sie den Wickel 7 zur Stirnfläche 5 der Hülse 1 hin. Dabei gelangen die Windungen des Wickels 7 unter die Längssicken 4, deren Tiefe zur Stirnfläche 5 hin zunimmt. Dadurch werden die Sicken 4 und mit ihnen die Hülse 1 insgesamt im Bereich ihres Endabschnitts 3 radial nach außen gedrückt, so dass das zu befestigende Bauelement wie etwa der Fensterrahmen 12 in Fig. 8 fest relativ zur Wand 13 befestigt wird, in der sich der dem Endabschnitt 3 gegenüberliegende Endabschnitt 14 der Hülse 1 befindet. In Fig. 8 ist das Aufweiten des Endabschnitts 3 durch Heranziehen des Wickels 7 an den Schraubenkopf 11 und das Stirnende 5 der Hülse 1 (durch Drehen der Schraube 10) noch nicht erfolgt.

Der Endabschnitt 14 der Hülse 1 wird im allgemeinen allein durch die Reibung im Sackloch 15 der Wand gehalten, weiche von der elastischen Rückstellkraft ausgeübt wird, die der auf Grund des Längsschlitzes 2 etwas einfedernde Endabschnitt 14 der Hülse 1 aus-übt. Es ist jedoch auch möglich, im Endabschnitt 14 einen weiteren Aufweitkörper in Form eines Wickels 7 in Verbindung mit entsprechenden Längsrippen in der Hülse 1 anzuordnen. Dann ist es ferner möglich, bei der Vormontage die Wickel 7 in Bezug auf die zugehörigen Längssicken so anzuordnen, dass die Wickel 7 nicht gleichzeitig, sondern nacheinander mit den zugehörigen Längssicken in Eingriff kommen und auf diese Weise erst der eine der Endabschnitte 3 oder 14 und dann der andere aufgeweitet wird.

## Patentansprüche

1. Befestigungsanker zum Anbringen eines Bauelements, insbesondere eines Fensterrahmens, an einer Wand o. dgl., mit einer länglichen Hülse (1), deren einer Endabschnitt (14) zur Befestigung in der Wand dient, während nahe ihrem anderen Endabschnitt (3) in ihrem Innern ein Aufweitkörper (7) angeordnet ist, durch dessen axiale Längsverschiebung die Hülse (1) zur Befestigung des Bauelements im wesentlichen radial aufweitbar ist,
**dadurch gekennzeichnet, dass** der Aufweitkörper (7) in der Hülse (1) unverdrehbar geführt und konzentrisch zu ihr durchgehende Innengewindegänge aufweist, in die das entsprechende Außengewinde (9) einer Schraube (10) eingreift, welche endseitig in die Hülse (1) eingesteckt ist und sich mit ihrem Kopf (11) an der Stirnseite (5) der Hülse (1) abstützt, und dass in die Hülse (1) im Aufweitbereich (Endabschnitt 3) Längssicken (4) eingeprägt sind, die mit dem Aufweitkörper (7) bei dessen von der Schraubendrehung bewirkten Längsverschiebung zusammenwirken.

2. Befestigungsanker nach Anspruch 1,
**dadurch gekennzeichnet, dass** die Hülse (1) über mindestens einen Teil ihrer Länge längsgeschlitzt (2) ist und ein Ansatz (8) am Aufweitkörper (7) im Schlitz (2) geführt ist.

3. Befestigungsanker nach Anspruch 1 oder 2,
**dadurch gekennzeichnet, dass** der Aufweitkörper ein spiralfederartiger Wickel (7) aus Runddraht ist, dessen Steigung derjenigen des Schraubengewindes (9) entspricht.

4. Befestigungsanker nach einem der vorhergehenden Ansprüche,
**dadurch gekennzeichnet, dass** die Tiefe der Längssicken (4) in der Hülse (1) zum Aufweitkörper (7) hin abnimmt.

5. Befestigungsanker nach einem der vorhergehenden Ansprüche,
**dadurch gekennzeichnet, dass** innerhalb der Hülse (1) mehrere Aufweitkörper (7) koaxial angeordnet sind und einerseits mit derselben Schraube (10), andererseits mit mehreren entsprechend in Längsrichtung versetzt in die Hülse (1) eingeprägten Längssicken (4) zusammenwirken.

6. Befestigungsanker nach Anspruch 5,
**dadurch gekennzeichnet, dass** im vormontierten Zustand die Aufweitkörper (7) in unterschiedlichem axialen Abstand von den zugehörigen Längssicken (4) angeordnet sind.

7. Befestigungsanker nach einem der vorhergehenden Ansprüche,
**dadurch gekennzeichnet, dass** zwischen den Längssicken (4) parallel zu diesen mindestens ein Schlitz (6) in die Hülse (1) eingebracht ist.

8. Befestigungsanker nach Anspruch 7,
**dadurch gekennzeichnet, dass** mindestens eine Seitenkante (6a) des Schlitzes (6) radial ausgestellt ist.

## Claims

1. Fastening anchor for attaching a constructional unit, and in particular a window frame, to a wall or the like, having an elongated sleeve (1) of which one end portion (14) is used for fastening in the wall, whereas close to its other end portion (3) and in its interior there is arranged a expander body (7) by whose axial longitudinal displacement the sleeve (1) can be expanded substantially radially to allow the constructional unit to be fastened in place, **characterised in that** the expander body (7) is non-rotatably guided in the sleeve (1) and has turns of an inside thread which pass through it concentrically with it, in which turns the corresponding outside thread (9) of a screw (10) engages, which screw (10) is inserted in an end of the sleeve (1) and is supported against the end (5) of the sleeve (1) by its head (11), and **in that** there are impressed into the sleeve (1), in the expanding region (end portion 3), longitudinal corrugations (4) which co-operate with the expander body (7) in the course of the latter's longitudinal displacement caused by the rotation of the screw.

2. Fastening anchor according to claim 1, **characterised in that** the sleeve (1) is longitudinally slotted (2) for at least part of its length and a projection (8) on the expander body (7) is guided in the slot (2).

3. Fastening anchor according to claim 1 or 2, **characterised in that** the expander body is a coil-spring-like wound member (7) of circular-section wire whose pitch corresponds to that of the thread (9) of the screw.

4. Fastening anchor according to one of the foregoing claims, **characterised in that** the depth of the longitudinal corrugations (4) in the sleeve (1) decreases towards the expander body (7).

5. Fastening anchor according to one of the foregoing claims, **characterised in that** a plurality of expander bodies (7) are arranged co-axially inside the sleeve (1) and co-operate on the one hand with the same screw (10) and on the other hand with a plurality of longitudinal corrugations (4) impressed into the sleeve (1), which corrugations (4) are offset as appropriate in the longitudinal direction.

6. Fastening anchor according to claim 5, **characterised in that**, in the pre-assembled state, the expander bodies (7) are arranged at different distances axially from the associated longitudinal corrugations.

7. Fastening anchor according to one of the foregoing claims, **characterised in that** at least one slot (6) is made in the sleeve (1) between the longitudinal corrugations (4) and parallel thereto.

8. Fastening anchor according to claim 7, **characterised in that** at least one side-edge (6a) of the slot (6) is angled out radially.

## Revendications

1. Boulon d'ancrage pour le montage d'un élément de construction, en particulier d'un cadre de fenêtre, dans une paroi ou une pièce de ce genre, avec un manchon allongé (1) dont un tronçon d'extrémité (14) sert à la fixation dans la paroi alors qu'un élément d'expansion (7), grâce au déplacement longitudinal axial duquel le manchon (1) peut être expansé sensiblement radialement pour la fixation de l'élément de construction, est agencé, à l'intérieur du manchon, près de son autre tronçon d'extrémité (3), **caractérisé en ce que** l'élément d'expansion (7) est guidé dans le manchon (1) pour résister à la torsion et comporte des filets de vis intérieurs traversants concentriques par rapport au manchon dans lesquels s'engrène le filet extérieur correspondant (9) d'une vis (10) qui est enfichée par son extrémité dans le manchon (1) et qui s'appuie avec sa tête (11) sur la face avant (5) du manchon (1), et **en ce que** des moulures longitudinales (4), qui coopèrent avec l'élément d'expansion (7) lors du déplacement longitudinal de celui-ci provoqué par la rotation de la vis, sont enfoncées dans le manchon (1) dans la zone d'expansion (tronçon d'extrémité 3).

2. Boulon d'ancrage selon la revendication 1, **caractérisé en ce que** le manchon (1) est fendu longitudinalement (2) sur au moins une partie de sa longueur et **en ce qu'**un épaulement (8) est guidé dans la fente (2) sur l'élément d'expansion (7).

3. Boulon d'ancrage selon la revendication 1 ou 2, **caractérisé en ce que** l'élément d'expansion est un bobinage en forme de ressort spiral (7) en fil rond dont le pas correspond à celui du filet de vis (9).

4. Boulon d'ancrage selon l'une quelconque des revendications précédentes, **caractérisé en ce que** la profondeur des moulures longitudinales (4) dans le manchon (1) diminue en direction de l'élément d'expansion (7).

5. Boulon d'ancrage selon l'une quelconque des revendications précédentes, **caractérisé en ce que**, à l'intérieur du manchon (1), plusieurs éléments d'expansion (7) sont agencés coaxialement et coopèrent, d'une part, avec la même vis (10), d'autre part avec plusieurs moulures longitudinales (4) enfoncées dans le manchon (1), décalées de manière appropriée dans la direction longitudinale.

6. Boulon d'ancrage selon la revendication 5, **caractérisé en ce que**, à l'état pré-monté, les éléments d'expansion (7) sont agencés à une distance axiale différente par rapport aux moulures longitudinales associées (4) .

7. Boulon d'ancrage selon l'une quelconque des revendications précédentes, **caractérisé en ce que**, entre les moulures longitudinales (4), au moins une fente (6) est agencée dans le manchon (1) parallèlement à celles-ci.

8. Boulon d'ancrage selon la revendication 7, **caractérisé en ce qu'**au moins une arête latérale (6a) de la fente (6) s'étend dans le sens radial.
